# EUROPÄISCHE PATENTANMELDUNG

(11) **EP 1 518 619 A1**
(43) Veröffentlichungstag der Anmeldung: **30.03.2005**
(21) Anmeldenummer: 04090371.8
(22) Anmeldetag: 23.09.2004
(51) Int. Cl.: B22C 21/14, F01D 5/18

(54) **Turbinenschaufel für ein Flugzeugtriebwerk und Giessform zu deren Herstellung**

(30) Priorität: 29.09.2003 DE 10346366
(71) Anmelder: Rolls-Royce Deutschland Ltd & Co KG, 15827 Dahlewitz (DE)
(72) Erfinder: Blume, Barbara, 14165 Berlin (DE)
(74) Vertreter: Wablat, Wolfgang, Dr.Dr.

(57) **Zusammenfassung**

Eine gießtechnisch gefertigte hohle Turbinenschaufel weist eine Kühlluftkavität (8) und von dieser ausgehende Filmkühlkanäle (12) auf. Die jeweils benachbarten Filmkühlkanäle, die ein großes Länge/Durchmesser-Verhältnis aufweisen, sind durch zueinander versetzt und zu den Filmkühlkanälen senkrecht angeordnete Querkanäle (13) verbunden. Die Gießform umfasst einen dem Ziegelmauerdesign der Filmkühl- und Querkanäle entsprechenden Kern mit langen Kernstiften, die gegenseitig durch Querstifte abgestützt sind. Die Turbinenschaufel kann einschließlich aller Filmkühlkanäle in hoher Qualität in einem Gießprozess hergestellt werden.

## Beschreibung

Die Erfindung betrifft eine in einem Gießverfahren hergestellte Turbinenschaufel mit mindestens einer sich radial erstreckenden, mit Kühlluft versorgten Kühlluftkavität und einer Mehrzahl von deren Innenfläche zur Außenfläche verlaufenden, radial im Abstand übereinander ausgebildeten Filmkühlkanälen, sowie eine zur gießtechnischen Fertigung der Turbinenschaufel vorgesehene Gießform mit einem auflösbaren Kern zur Ausbildung der Hohlräume.

Bei den zur Erhöhung der Leistungsfähigkeit von Gasturbinentriebwerken für Flugzeuge unternommenen Anstrengungen besteht eine wesentliche Zielstellung darin, die Temperatur der Turbinengase zu steigern. Den diesbezüglich aufgrund der begrenzten Hitzebeständigkeit der zur Verfügung stehenden Werkstoffe bestehenden Beschränkungen wird durch eine Innenkühlung der Turbinenschaufeln begegnet. Die in zentrale, radial verlaufende Hohlräume im Innern der Schaufeln eintretende Kühlluft kann durch eine Vielzahl feinster Filmkühlkanäle, die vom Schaufelfuß bis zur Schaufelspitze in radialem Abstand ausgebildet sind, nach außen austreten, um an der Außenfläche der Schaufel einen Kühlfilm zu erzeugen. Dieser Kühlfilm bildet eine Trennschicht zwischen der Oberfläche der Turbinenschaufel und den auf die Schaufelfläche auftreffenden heißen Gasen, um insbesondere die Druckseite der Schaufel und dort ganz besonders den Bereich der aufgrund der geringen Stärke gegenüber Belastungen sensiblen und kühltechnisch problematischen Hinterkante der Turbinenschaufel zu kühlen.

Turbinenschaufeln mit einer Mehrzahl im Bereich der Hinterkante ausgebildeten, entsprechend der geringen Materialstärke in diesem Schaufelteil langgestreckten und dünnen sowie im Abstand parallel zueinander verlaufenden Filmkühlkanälen sind beispielsweise aus der EP 0 916 809 A2 oder der DE 40 03 804 C2 bekannt.

Die Herstellung von Turbinenschaufeln mit Filmkühlkanälen im Bereich der Schaufelhinterkante bereitet jedoch insofern Schwierigkeiten, als diese Kanäle nach der Formgebung der Schaufeln in einem aufwendigen Bearbeitungsverfahren auf der Grundlage elektrischer Entladungsvorgänge, nämlich dem EDM-Verfahren (Electro Discharge Machining), erzeugt werden und dieses Verfahren zum einen teuer und zum anderen den höchsten Anteil am Ausschuss im gesamten Fertigungsprozess hat.

Das Gießen der Turbinenschaufel einschließlich der Filmkühlbohrungen an der Hinterkante ist bisher nicht möglich bzw. bei den neueren Gießverfahren, beispielsweise auf der Grundlage der virtuellen Gussformherstellung (Virtual Pattern Casting) oder der Gießtechnik mit wasserlöslichen Kern (Soluble Core), bei denen die im Innern des fertigen Gussteils verbliebenen Teile des Gießkerns mit geeigneten Mitteln aus dem Gussteil herausgelöst werden, insofern nachteilig, als die betreffenden Gießkernabschnitte (dünne Stifte) für die langen, dünnen Hinterkanten-Filmkühlkanäle zum einen den bei der Herstellung (Brennen) der Gießform auftretenden hohen Spannungen nicht standhalten. Die Gießkernabschnitte sind beim VPC-Verfahren Keramikstifte, die somit bereits bei der Gießformherstellung oder zum anderen beim Abkühlen des in der Gießform befindlichen Metalls und den dabei auftretenden Spannungen brechen können. Durch das Brechen der bestimmte Teile des Kerns bildenden dünnen Keramikstifte noch vor dem vollständigen Ende des Gießprozesses werden die Filmkühlkanäle nicht vollständig ausgebildet, das heißt, sie sind ganz oder teilweise verschlossen und die Schaufel somit ist unbrauchbar.

Der Erfindung liegt die Aufgabe zugrunde, eine Gießform sowie eine mit dieser hergestellte Turbinenschaufel für Gasturbinentriebwerke so auszubilden, dass bei hoher Qualität eine kostengünstige Fertigung der Schaufel in einem Gießverfahren möglich ist und eine ausreichende Kühlwirkung gewährleistet ist.

Erfindungsgemäß wird die Aufgabe mit gemäß den Merkmalen des Patentanspruchs 1 ausgebildeten Gießform sowie mit einer dementsprechend gestalteten Turbinenschaufel nach Patentanspruch 4 gelöst. Zweckmäßige Ausgestaltungen der Erfindung ergeben sich aus den Unteransprüchen.

Der Grundgedanke der Erfindung besteht darin, dass die Turbinenschaufel vollständig, das heißt, auch im Bereich der an der Hinterkante vorgesehenen Filmkühlkanäle mit einem großen Länge/Durchmesser-Verhältnis, in einer Gießform mit einem nach dem Gießvorgang auflösbaren Kern durchgeführt wird, wobei aber sehr lange, dünne Kernstifte untereinander durch Querstifte abgestützt sind. Beim Brennen und Abkühlen des Kerns sowie während und nach dem Gießprozess werden die langen Kernstifte durch die dabei auftretenden Spannungen nicht beschädigt und die Turbinenschaufel einschließlich der Filmkühlkanäle kann in einem kostengünstigen Gießverfahren gefertigt werden.

Die erfindungsgemäße Turbinenschaufel weist zwischen den Filmkühlkanälen den Querstiften entsprechende Querkanäle auf, die senkrecht zu den Filmkühlkanälen verlaufen. Durch diese Anordnung der Querkanäle zu den Filmkühlkanälen ist gewährleistet, dass die Kühlluft ausschließlich in Richtung der Filmkühlkanäle strömt, das heißt, nicht abgelenkt wird, und somit der geforderte Kühlluftfilm ausgebildet und die geforderte Kühlwirkung erzielt wird.

Ein Ausführungsbeispiel der Erfindung wird anhand der Zeichnung näher erläutert. Es zeigen:
- Fig. 1: eine Schnittansicht einer hohlen, in einem Gießprozess hergestellten Turbinenschaufel mit in der Außenwand auf der Druckseite ausgebildeten Filmkühlkanälen; und
- Fig. 2: eine Schnittansicht längs der Linie AA in Fig. 1 zur Darstellung der im Bereich der Hinterkante der Turbinenschaufel ausgebildeten langen Filmkühlkanäle.

Die hohl ausgebildete, in einem Präzisionsgießprozess mit verlorenem (nach Beendigung des Gießprozesses lösbarem) Kern gefertigte Turbinenschaufel 1 hat eine Druckseite 2, eine Saugseite 3, eine Vorderkante 4 und eine Hinterkante 5. Durch Querwände 6 zwischen den Außenwänden 7 der Turbinenschaufel 1 werden sich in radialer Richtung der Turbinenschaufel erstreckende Kühlluftkavitäten 8 definiert, in die über im Schaufelfuß befindliche Öffnungen (nicht dargestellt) Kühlluft in das Schaufelinnere gelangt. Die Kühlluft strömt über Kühlkanäle 9 in den Querwänden 6 in benachbarte Hohlräume 10 im Schaufelinneren und/oder in der Außenwand 7 radial im Abstand ausgebildete Filmkühlkanäle 11 bzw. 12 nach außen. Die aus den Filmkühlkanälen 11, 12 austretende Luft erzeugt einen längs der Außenwand strömenden Kühlgasfilm, mit dem insbesondere die Druckseite 2 der Turbinenschaufel 1 gekühlt wird.

Die an der Hinterkante 5 der Turbinenschaufel 1 ausgebildeten Filmkühlkanäle 12 sind in dem Bereich, in dem die Filmkühlkanäle eine bestimmte Länge überschreiten, das heißt dort, wo das Länge/Durchmesser-Verhältnis besonders groß ist, durch mindestens einen Querkanal 13 miteinander verbunden. Die in radialer Richtung (Längsrichtung) der Turbinenschaufel 1 benachbarten Querkanäle 13 sind nach Art eines Ziegelmauermusters versetzt zueinander angeordnet und sind im Wesentlichen senkrecht zu den Filmkühlkanälen 12 angeordnet. Diese senkrecht zu den Filmkühlkanälen 12 verlaufende Anordnung der Querkanäle 13 gewährleistet, dass die Kühlluft die Filmkühlkanäle 12 vollständig durchströmt und tatsächlich die erforderlichen Kühlbereiche an der Hinterkante 5 der Turbinenschaufel 1 erreicht.

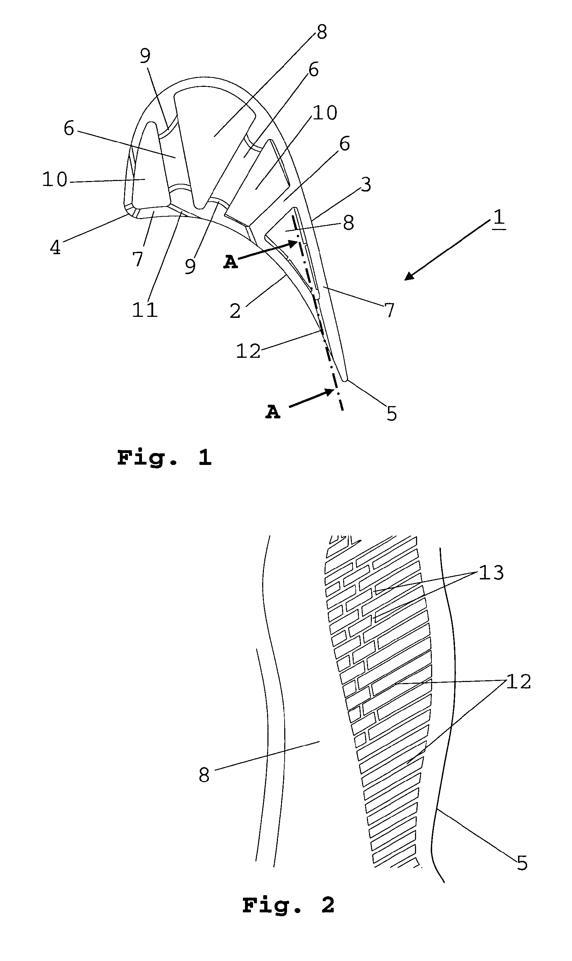

Ausgangspunkt des Ziegelmauerdesigns bei den Filmkühlkanälen mit einem großen Länge/Durchmesser-Verhältnis ist die besondere Kernstruktur der Gießform (nicht dargestellt) zur Herstellung der Turbinenschaufel 1, und zwar im Bereich der Hinterkante 5. Dort ist das zur Ausbildung der Filmkühlkanäle 12 in radialem Abstand parallel übereinander angeordnete langgestreckte dünne Kernmaterial (Kernstifte) durch senkrecht zu diesem, aber in radialer Richtung versetzt zueinander angeordnete Querstifte abgestützt. (Auf die Darstellung der Kernstruktur wurde im vorliegenden Ausführungsbeispiel verzichtet, da sie genau dem in Fig. 2 wiedergegebenen Ziegelmauerdesign der durch die Querkanäle verbundenen Filmkühlkanäle entspricht.) Diese Kernstruktur zur Ausbildung der Hinterkante verhindert, dass das zur Ausbildung der langgestreckten Filmkühlkanäle 12 vorgesehene dünne Kernmaterial durch Schrumpfspannungen während des Abkühlens der gebrannten Gießform und des Kerns oder durch Spannungen beim Abkühlen der in die Gießform eingebrachten heißen Metallschmelze bricht und nach dem Herauslösen bzw. Herausspülen des Kernmaterials nach dem Prinzip der verlorenen Form aus dem Gussteil, das heißt, der Turbinenschaufel 1, die Filmkühlkanäle 12 vollständig ausgebildet sind und damit die Filmkühlung an der Hinterkante 5 der Turbinenschaufel 1 gewährleistet ist.

Mit dem so ausgebildeten Kern für die Gießform und der entsprechend gestalteten Turbinenschaufel im Bereich der in die Hinterkante 5 eingeformten Filmkühlkanäle 12 ist eine kostengünstige gießtechnische Fertigung der Turbinenschaufel einschließlich der Filmkühlkanäle in hoher Qualität möglich.

### Bezugszeichenliste

- 1: Turbinenschaufel
- 2: Druckseite
- 3: Saugseite
- 4: Vorderkante
- 5: Hinterkante
- 6: Querwand
- 7: Außenwand
- 8: Kühlluftkavität
- 9: Kühlkanäle in 6
- 10: Hohlräume
- 11: Filmkühlkanäle in 7
- 12: Filmkühlkanäle an der Hinterkante
- 13: Querkanal

## Patentansprüche

1. Gießform zur Herstellung einer hohlen Turbinenschaufel mit mindestens einer sich radial erstreckenden Kühlluftkavität und einer Mehrzahl von deren Innenfläche zur Außenfläche verlaufenden, radial im Abstand übereinander ausgebildeten Filmkühlkanälen, wobei die Gießform ein äußeres Formteil und einen in dieses eingebrachten, nach dem Gießen auflösbaren Kern zur Ausbildung der Hohlräume und Kanäle aufweist, **dadurch gekennzeichnet, dass** der Kern zur Ausbildung von Filmkühlkanälen mit einem großen Länge/Durchmesser-Verhältnis eine Mehrzahl entsprechend der Kanallänge langgestreckter, in Längsrichtung der Gießform im Abstand übereinander angeordneter Kernstifte umfasst und benachbarte Kernstifte jeweils durch mindestens einen, im Wesentlichen senkrecht zu diesen angeordneten Querstift miteinander verbunden und während des Kernfertigungs- und des Gießprozesses gegenseitig abgestützt sind.

2. Gießform nach Anspruch 1, **dadurch gekennzeichnet, dass** in Längsrichtung der Gießform übereinander benachbarte Querstifte regelmäßig versetzt zueinander angeordnet sind.

3. Gießform nach Anspruch 1 oder 2, **dadurch gekennzeichnet, dass** die Anzahl der zwischen zwei Kernstiften angeordneten Querstifte in Abhängigkeit von der Länge der Kernstifte variabel ist.

4. Turbinenschaufel für ein Flugzeugtriebwerk, die in einer Gießform nach Anspruch 1 im Feinguss mit verlorenem Kern gefertigt ist und die eine Vorderkante, eine Hinterkante und mindestens eine sich radial erstreckende, mit Kühlluft versorgte Kühlluftkavität aufweist, von deren Innenfläche eine Mehrzahl zur Außenfläche verlaufender, radial im Abstand übereinander ausgebildeter Filmkühlkanäle zur Erzeugung eines Kühlluftfilms ausgeht, **dadurch gekennzeichnet, dass** zwischen benachbarten Filmkühlkanälen (12) mit einem großen Länge/Durchmesser-Verhältnis jeweils mindestens ein im Wesentlichen senkrecht zu diesen angeordneter Querkanal (13) gießtechnisch ausgeformt ist und die radial übereinander liegenden Querkanäle (13) versetzt zueinander angeordnet sind.

5. Turbinenschaufel nach Anspruch 4, **dadurch gekennzeichnet, dass** die Anzahl der Querkanäle (13) zwischen benachbarten Filmkühlkanälen (12) in Abhängigkeit von der Länge der Filmkühlkanäle variabel ist.

6. Turbinenschaufel nach Anspruch 4 oder 5, **dadurch gekennzeichnet, dass** die Filmkühlkanäle (12) und Querkanäle (13) ein Ziegelmauerdesign bilden.

7. Turbinenschaufel nach Anspruch 1, **dadurch gekennzeichnet, dass** die Querkanäle (13) den Filmkühlkanälen (12) im Bereich der Hinterkante (5) der Turbinenschaufel (1) zugeordnet sind.
